# NEUE EUROPÄISCHE PATENTSCHRIFT

(11) **EP 2 436 493 B2**
(45) Veröffentlichungstag und Bekanntmachung des Hinweises auf die Entscheidung über den Einspruch: **05.04.2017**
(45) Hinweis auf die Patenterteilung: 01.01.2014
(21) Anmeldenummer: 10011822.3
(22) Anmeldetag: 29.09.2010
(51) Int. Cl.: B26D 7/32, F16F 15/22

(54) **Verwendung einer Vorrichtung mit Produktförderer und Querantrieb**
Use of a device with product conveyor and transverse drive
Usage d'un dispositif doté d'un transporteur de produit et d'un entraînement transversal

(43) Veröffentlichungstag der Anmeldung: 04.04.2012
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-B1- 0 820 943
- WO-A1-00/59690
- US-A1- 2003 145 700
- US-A1- 2004 031 363
- US-B1- 6 715 947

## Beschreibung

Die vorliegende Erfindung betrifft eine Verwendung einer Vorrichtung mit einem in einer Förderrichtung antreibbaren Produktförderer und einem Querantrieb, durch den der Produktförderer in einer Richtung quer zur Förderrichtung bewegbar ist.

Eine derartige Verwendung ist grundsätzlich aus der US 2003/0145700 A1 bekannt und wird beispielsweise in Verbindung mit einer Schneidmaschine zum Aufschneiden von Lebensmittelprodukten eingesetzt, um eine geschindelte Anordnung, ein sogenanntes "Querschindeln", von Produktscheiben zu ermöglichen, die durch die Schneidemaschine von einem Lebensmittelprodukt abgetrennt werden. Der Oberbegriff des Anspruchs 1 basiert auf diesem Dokument.

Aufgrund der Querbewegung des Produktförderers als Ganzes treten Kräfte in der Vorrichtung auf, welche nicht nur eine entsprechend ausreichende Dimensionierung von Lagerstellen zur Lagerung des Produktförderers erfordern, sondern welche auch die Vorrichtung in ihrer Gesamtheit in unerwünschte Schwingungen versetzen kann. Das Problem unerwünschter Schwingungen ist vor allem bei kleineren Vorrichtungen ausgeprägt, deren Masse nicht ausreicht, um die durch die Querbewegung des Produktförderers verursachten Kräfte zu kompensieren, insbesondere wenn es sich um schnellere Querbewegungen handelt. Unerwünschte Schwingungen konnten in solchen Vorrichtungen bislang nur durch eine Reduzierung der Amplitude und/oder der Frequenz der Querbewegung vermieden werden.

Der Erfindung liegt die Aufgabe zugrunde, eine Verwendung einer Vorrichtung der eingangs genannten Art zu schaffen, die das Problem unerwünschter, durch die Querbewegung des Produktförderers verursachter Schwingungen überwindet.

Diese Aufgabe wird durch eine Verwendung gemäß Anspruch 1 gelöst.

Die Ausgleichsmasse bildet ein Gegengewicht zu dem Produktförderer, durch welches durch die Querbewegung des Produktförderers verursachte Kräfte kompensiert und daraus resultierende Schwingungen in der Vorrichtung zumindest annähernd vollständig verhindert werden. Anders gesagt wird durch die Kopplung von Produktförderer und Ausgleichsmasse die Laufruhe der Vorrichtung erhöht. Die Ausrüstung der Vorrichtung mit einer zusätzlichen, eigens zu diesem Zweck vorgesehenen Ausgleichsmasse ermöglicht es somit, auch in kleineren Vorrichtungen gefahrlos schnellere Querbewegungen und/oder Querbewegungen mit einer größeren Amplitude zu realisieren. Entsprechend lassen sich auch in größeren Vorrichtungen die Amplitude und/oder Frequenz der Querbewegung des Produktförderers erhöhen.

Unter "Querbewegung" und "Querrichtung" sind in diesem Kontext alle Bewegungen bzw. Richtungen zu verstehen, die nicht parallel zur Förderrichtung, d.h. also unter einem Winkel größer 0° zu der Förderrichtung verlaufen.

Vorteilhafte Ausbildungen der Erfindung sind den Unteransprüchen, der Beschreibung und der Zeichnung zu entnehmen.

Gemäß einer Ausführungsform ist die Ausgleichsmasse beweglich, insbesondere verschiebbar, gelagert.

Dabei ist die Ausgleichsmasse durch einen Koppelmechanismus vorzugsweise derart mit dem Produktförderer gekoppelt, dass eine Querbewegung des Produktförderers zu einer, insbesondere synchronen, Bewegung der Ausgleichsmasse in die zum Produktförderer entgegengesetzte Richtung führt. Die Ausgleichsmasse wird mit anderen Worten also derart entgegengesetzt zu dem Produktförderer bewegt, dass sich die aus der Querbewegung des Produktförderers resultierenden Kräfte einerseits und die durch die entsprechend umgekehrte Bewegung der Ausgleichsmasse verursachten Kräfte gegenseitig zumindest weitgehend aufheben. Es treten folglich keine Kräfte auf, welche die Vorrichtung als Ganzes in Schwingung versetzen könnten.

Gemäß einer weiteren Ausführungsform umfasst der Koppelmechanismus einen zweiseitigen Hebel, dessen eines Ende mit der Ausgleichsmasse verbunden ist und dessen anderes Ende mit dem Querantrieb verbunden ist. Der Querantrieb sorgt mit anderen Worten also nicht nur für die Querbewegung des Produktförderers, sondern gleichzeitig auch für die Bewegung der Ausgleichsmasse. Dabei stellt ein derartiger Hebelmechanismus einen besonders einfachen Mechanismus zur Bewegung der Ausgleichsmasse dar.

Der Hebel ist bevorzugt um eine Achse verschwenkbar, die rechtwinklig zu der Querbewegungsrichtung des Produktförderers und/oder zu der Bewegungsrichtung der Ausgleichsmasse orientiert ist

Vorteilhafterweise ist der Hebel im Bereich seines einen Endes mit der Ausgleichsmasse gelenkig verbunden. Im Bereich seines anderen Endes ist der Hebel bevorzugt mit einer Spindelmutteraufnahme oder einer Gewindemutter gelenkig verbunden, welche mit einer Gewindespindel des Querantriebs in Eingriff steht.

Dabei kann die Gewindemutter mit einem Teil einer Trägerstruktur des Produktförderers fest verbunden sein, welcher in Richtung der Querbewegung relativ zu einem feststehenden Teil der Trägerstruktur verschiebbar ist. Der verschiebbare Teil der Trägerstruktur kann dabei einen hin und her bewegbaren Trägerarm für den Produktförderer bilden. Konkret kann der Produktförderer an einem der Ausgleichsmasse abgewandten Ende des Trägerarms an diesem angebracht sein.

Vorteilhafterweise ist die Ausgleichsmasse so ausgebildet, dass der Schwerpunkt der Ausgleichsmasse und der Schwerpunkt des verschiebbaren Teils der Trägerstruktur auf einer Achse liegen, die sich im Wesentlichen in Richtung der Querbewegung erstreckt. Hierdurch ist sichergestellt, dass die aus den entgegengesetzten Querbewegungen von Produktförderer und Ausgleichsmasse resultierenden Kräfte zumindest annähernd koaxial ausgerichtet sind. Unerwünschte Drehmomente, die infolge zueinander versetzt wirkender Kräfte auftreten könnten, werden somit vermieden, was letztlich zu einer noch höheren Laufruhe der Vorrichtung beiträgt.

Die Ausgleichsmasse kann den feststehenden Teil der Trägerstruktur zu diesem Zweck beispielsweise in Umfangsrichtung gesehen zumindest abschnittsweise umgeben.

Wenn die Masse der Ausgleichsmasse und die Masse des Produktförderers gleich groß sind, werden die Ausgleichsmasse und der Produktförderer für eine optimale Kraftkompensation bevorzugt um gleiche Wegbeträge in Querrichtung bewegt. Grundsätzlich kann die Masse der Ausgleichsmasse aber auch kleiner als die Masse des Produktförderers sein, in welchem Fall die Ausgleichsmasse für eine optimale Kraftkompensation einen weiteren Weg in Querrichtung zurücklegen müsste als der Produktförderer. Umgekehrt bräuchte die Ausgleichsmasse in dem Fall, dass ihre Masse größer als die des Produktförderers ist, zur optimalen Kraftkompensation um einen geringeren Betrag in Querrichtung verfahren zu werden.

Darüber hinaus liegt es im Rahmen der Erfindung, dass die durch die Querbewegung des Produktförderers verursachten Kräfte durch die Ausgleichsmasse nur teilweise kompensiert werden, beispielsweise wenn eine Ausgleichsmasse mit einer Masse, die geringer als die Masse des Produktförderers ist, nicht um einen ausreichend großen Weg in Querrichtung verfahren wird, z.B. nur so weit wie der Produktförderer oder weniger weit. In diesem Fall würden die durch die Querbewegung des Produktförderers verursachten Kräfte teilweise durch einen Grundaufbau der Vorrichtung aufgenommen, welcher seinerseits also eine ausreichende Masse aufweisen müsste, um aus der Querbewegung des Produktförderers resultierende Schwingungen in der Vorrichtung zumindest annähernd vollständig zu verhindern.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine perspektivische Ansicht einer erfindungsgemäß verwendbaren Vorrichtung mit einem Produktförderer und einem einen Antrieb für den Produktförderer beherbergenden Antriebsgehäuse;
- Fig. 2: eine perspektivische Ansicht des Antriebsgehäuses und des Produktförderers von Fig. 1(a) im eingefahrenen und (b) im ausgefahrenen Zustand des Produktförderers;
- Fig. 3: eine Ansicht von oben auf den Antrieb und den Produktförderer von Fig. 1 (a) im eingefahrenen und (b) im ausgefahrenen Zustand, jeweils bei geöffnetem Antriebsgehäuse;
- Fig. 4: eine Ansicht von unten auf den Antrieb und den Produktförderer von Fig. 1 (a) im eingefahrenen und (b) im ausgefahrenen Zustand, jeweils bei geöffnetem Antriebsgehäuse;
- Fig. 5: eine perspektivische Ansicht des Antriebsgehäuses mit geöffneter Seitenabdeckung;
- Fig. 6: eine perspektivische Ansicht eines Förderantriebs für den Produktförderer, eines Querantriebs für den Produktförderer und einer Ausgleichsmasse;
- Fig. 7: die Ansicht von Fig. 6 ohne den Förderantrieb;
- Fig. 8: eine perspektivische Ansicht des Produktförderers und von Teilen seines Antriebs; und
- Fig. 9: eine Schnittansicht der Komponenten von Fig. 8(a) im eingefahrenen und (b) im ausgefahrenen Zustand des Produktförderers.

In den Figuren ist eine Fördervorrichtung dargestellt, die einer Schneidmaschine zum Aufschneiden von Lebensmittelprodukten nachgelagert ist, um Produktscheiben abzutransportieren, welche durch die Schneidemaschine von einem Lebensmittelprodukt abgetrennt werden.

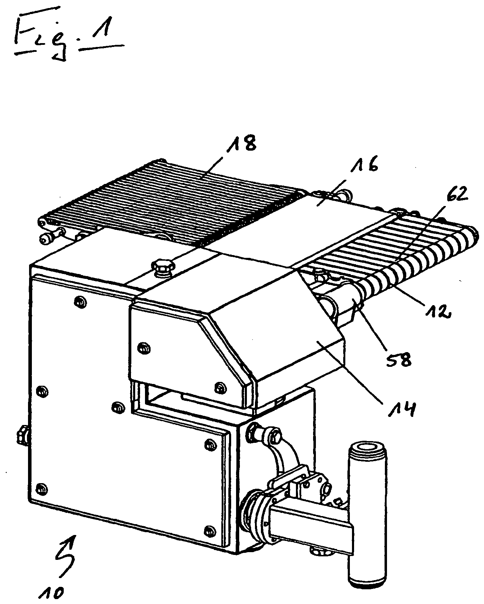

Wie Fig. 1 zeigt, umfasst die Vorrichtung einen Grundaufbau 10, einen Produktförderer 12 sowie einen in einem Antriebsgehäuse 14 untergebrachten Antrieb für den Produktförderer 12. Dem Produktförderer 12 sind in Förderrichtung gesehen zwei weitere Fördereinrichtungen 16, 18 nachgelagert.

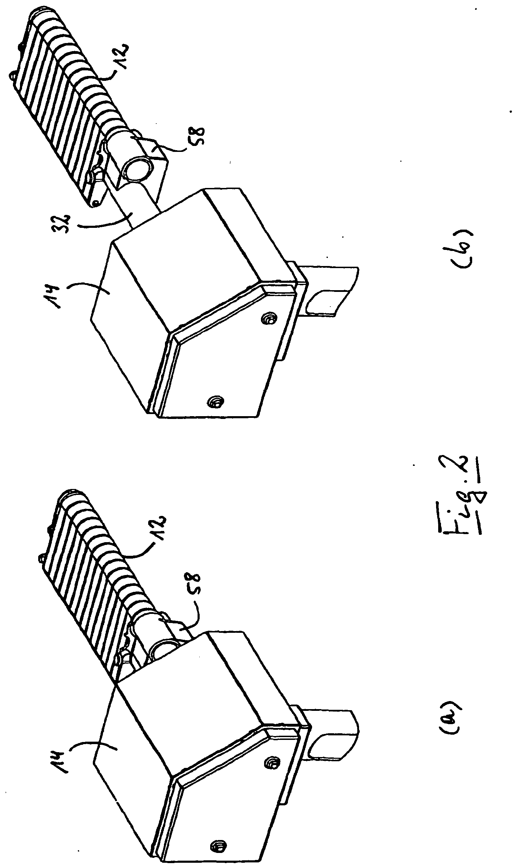

Um eine in Förderrichtung geschindelte Anordnung von durch die Schneidemaschine von einem Lebensmittelprodukt abgetrennten Produktscheiben zu ermöglichen, werden Förderbänder 62 des Produktförderers 12 während des Schneidvorgangs in Förderrichtung bewegt. Um eine quergeschindelte Anordnung der Produktscheiben zu erreichen, wird der Produktförderer 12 zusätzlich in einer Richtung quer zur Förderrichtung bewegt. In Fig. 2a ist der Produktförderer 12 in einer in Querrichtung maximal eingefahrenen Stellung und in Fig. 2b in einer maximal ausgefahrenen Stellung dargestellt. Üblicherweise wird der Produktförderer 12 mit einer an die Schneidgeschwindigkeit der Schneidemaschine angepassten Geschwindigkeit zwischen einer eingefahrenen Stellung und einer ausgefahrenen Stellung hin und her bewegt.

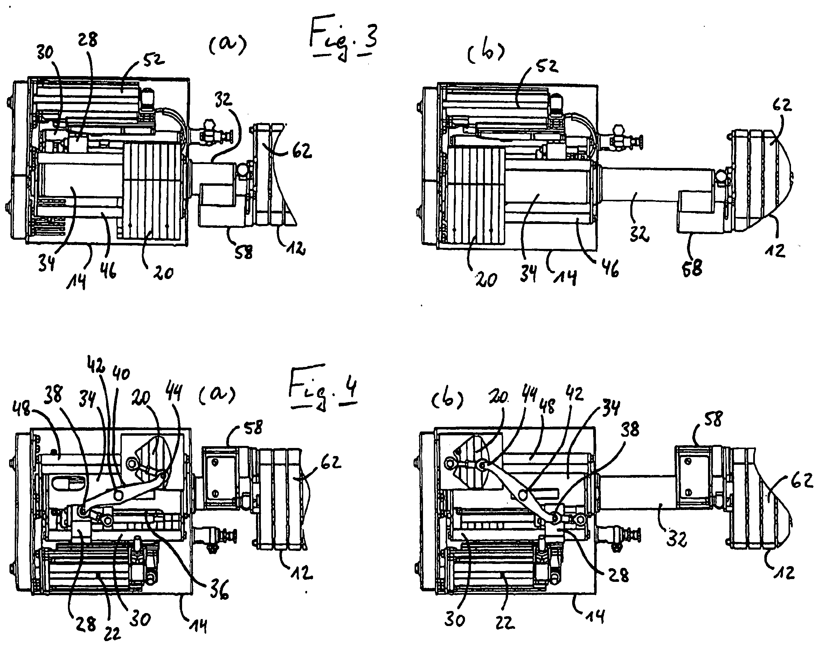

Wie Fig. 3 und 4 zeigen, ist der Produktförderer 12 mit einer in dem Antriebsgehäuse 14 untergebrachten Ausgleichsmasse 20 gekoppelt und zwar derart, dass sich die Ausgleichsmasse 20 stets in die zu dem Produktförderer 12 entgegengesetzte Richtung bewegt. Durch die Ausgleichsmasse 20 werden aus der Querbewegung des Produktförderers 12 resultierende Kräfte kompensiert, welche andernfalls unerwünschte Schwingungen in der Vorrichtung verursachen könnten.

Die Querbewegung von Produktförderer 12 und Ausgleichsmasse 20 erfolgt mittels eines in dem Antriebsgehäuse 14 untergebrachten Querantriebsmotors 22 (Fig. 4, 6 und 7), welcher über einen Antriebsriemen 24 eine Gewindespindel 26 antreibt. Die Gewindespindel 26 steht mit einer nicht dargestellten Spindelmutter in Eingriff, welche sich je nach Drehrichtung der Gewindespindel 26 in Querrichtung gesehen vor und zurück bewegt. Die Spindelmutter ist in einer Spindelmutteraufnahme 28 untergebracht, die an einer Führungsstange 30 in Querrichtung verschiebbar gelagert ist.

Zur Querbewegung des Produktförderers 12 ist die Spindelmutteraufnahme 28 mit einem rohrförmigen Trägerarm 32 fest verbunden, welcher ein aus dem Antriebsgehäuse 14 hervorstehendes Ende aufweist, in dessen Bereich der Produktförderer 12 angebracht ist. Der Produktförderer 12 wird mit anderen Worten durch den Trägerarm 32 getragen.

Der Trägerarm 32 ist in einem in dem Antriebsgehäuse 14 angeordneten feststehenden Trägerrohr 34 in Querrichtung verschiebbar gelagert. Damit die Spindelmutteraufnahme 28 an den in dem Trägerrohr 34 gelagerten Trägerarm 32 angreifen kann, weist das Trägerrohr 34 eine sich in axialer Richtung erstreckende Längsöffnung 36 auf.

Durch eine Verdrehung der Gewindespindel 26 wird die Spindelmutteraufnahme 28 in Querrichtung verfahren und hierdurch der Trägerarm 32 und somit letztlich der Produktförderer 12 in Querrichtung bewegt.

Wie Fig. 4 zeigt, ist die Spindelmutteraufnahme 28 an ihrer Unterseite gelenkig mit dem einen Ende 38 eines zweiseitigen Hebels 40 verbunden, welcher um eine zur Querrichtung rechtwinklige Achse, im vorliegenden Ausführungsbeispiel vertikale Achse 42, verdrehbar gelagert ist. Das andere Ende 44 des Hebels 40 ist gelenkig mit der Ausgleichsmasse 20 verbunden, welche auf zwei Führungsstangen 46, 48 in Querrichtung verschiebbar gelagert ist.

Durch die Kopplung von Ausgleichsmasse 20 und Spindelmutteraufnahme 28 über den Hebel 40 ist sichergestellt, dass sich die Ausgleichsmasse 20 synchron mit der Spindelmutteraufnahme 28 und folglich mit dem Trägerarm 32 und dem Produktförderer 12 bewegt, und zwar stets in die entgegengesetzte Richtung.

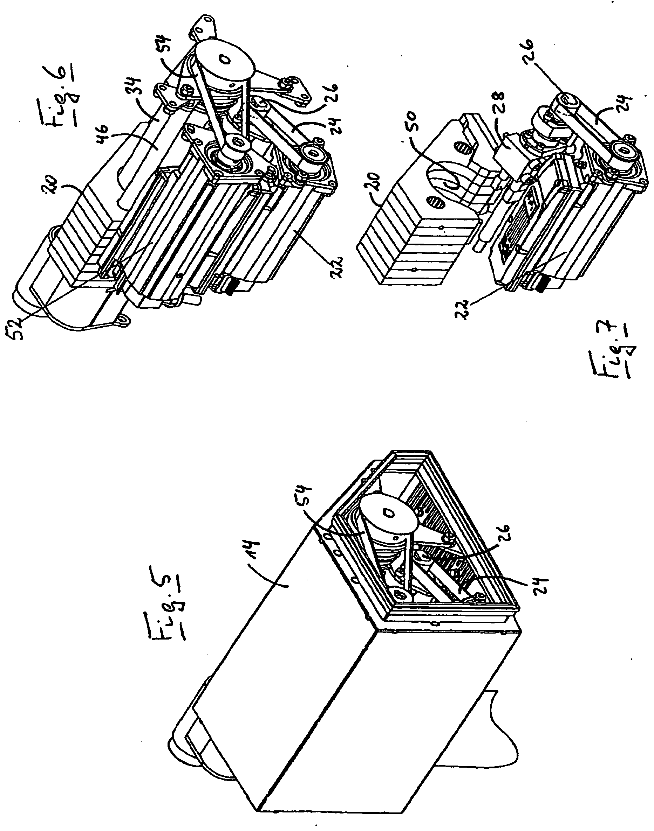

In Fig. 7 ist zu erkennen, dass die Ausgleichsmasse 20 eine sich in Querrichtung erstreckende Aussparung 50 aufweist, welche der Ausgleichsmasse 20 einen etwa U-förmigen Querschnitt verleiht. Das Profil der Aussparung 50 ist etwas größer als das Profil des Trägerrohrs 34 gewählt, was es ermöglicht, die Ausgleichsmasse 20 so um das Trägerrohr 34 herum anzuordnen, dass der Schwerpunkt der Ausgleichsmasse 20 und der Schwerpunkt des Trägerarms 32 auf einer Achse liegen, die zumindest annähernd in Querrichtung verläuft.

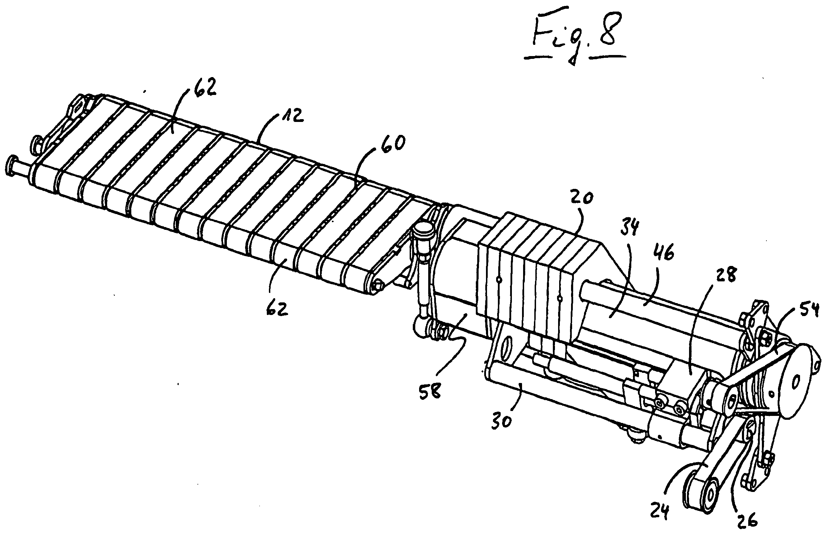

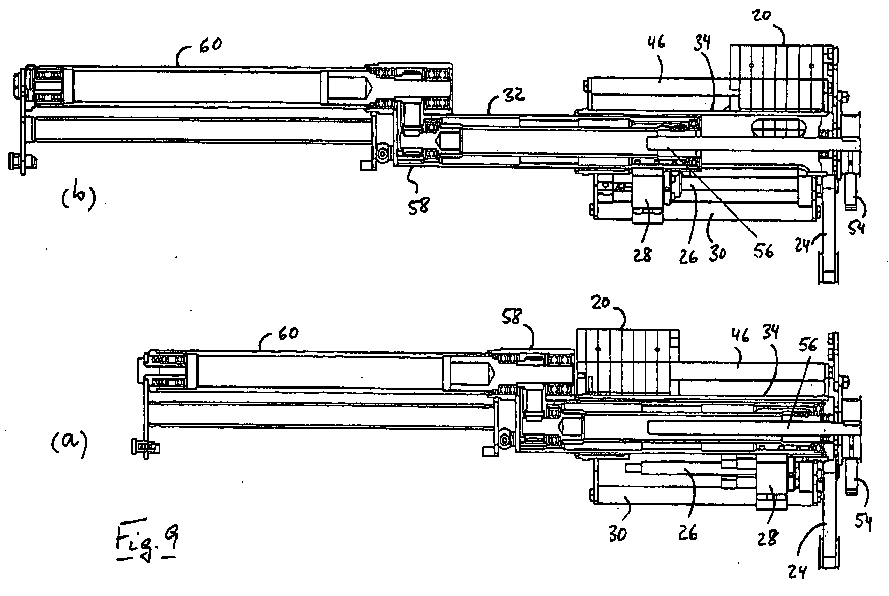

Zusätzlich zu dem Querantriebsmotor 22 ist außerdem ein Förderantriebsmotor 52 in dem Antriebsgehäuse 14 untergebracht (Fig. 6), welcher dazu dient, den Produktförderer 12 in Förderrichtung anzutreiben. Der Förderantriebsmotor 52 treibt über einen Antriebsriemen 54 eine in dem Trägerrohr 34 verlaufende Antriebswelle 56 an, deren Drehmoment über den Trägerarm 32 und ein am Ende des Trägerarms 32 vorgesehenes Versatzgetriebe 58 an eine Antriebsrolle 60 des Produktförderer 12 übertragen wird (Fig. 8 und 9). Durch die Rotation der Antriebsrolle 60 werden um die Antriebsrolle 60 herum geführte streifenförmige Förderbänder 62 des Produktförderers 12 in Förderrichtung bewegt.

Es versteht sich, dass der Produktförderer 12 anstelle der in den Figuren gezeigten streifenförmigen Förderbänder 62 auch Förderriemen oder ein sich über die im Wesentlichen ganze Breite des Produktförderers 12 erstreckendes Förderband aufweisen kann.

### Bezugszeichenliste

- 12: 10 Grundaufbau Produktförderer
- 14: Antriebsgehäuse
- 16: Fördereinrichtung
- 18: Fördereinrichtung
- 20: Ausgleichsmasse
- 22: Antriebsmotor
- 24: Antriebsriemen
- 26: Gewindespindel
- 28: Spindelmutteraufnahme
- 30: Führungsstange
- 32: Trägerarm
- 34: Trägerrohr
- 36: Längsöffnung
- 38: Ende
- 40: Hebel
- 42: Achse
- 44: Ende
- 46: Führungsstange
- 48: Führungsstange
- 50: Aussparung
- 52: Förderantriebsmotor
- 54: Antriebsriemen
- 56: Antriebswelle
- 58: Versatzgetriebe
- 60: Antriebsrolle
- 62: Förderband

## Patentansprüche

1. Verwendung einer Vorrichtung,
die einen in einer Förderrichtung antreibbaren Produktförderer (12) und einen Querantrieb umfasst, durch den der Produktförderer (12) als Ganzes in einer Richtung quer zur Förderrichtung bewegbar ist,
zum quergeschindelten Anordnen von durch eine Schneidemaschine von einem Lebensmittelprodukt abgetrennten Produktscheiben zusätzlich zu einem in Förderrichtung geschindelten Anordnen der Produktscheiben,
wobei der Produktförderer (12) mit einer Ausgleichsmasse (20) gekoppelt ist, mittels welcher durch eine Querbewegung des Produktförderers (12) auftretende Kräfte kompensierbar sind.

2. Verwendung einer Vorrichtung nach Anspruch 1,
**dadurch gekennzeichnet, dass**
die Ausgleichsmasse (20) beweglich, insbesondere verschiebbar, gelagert ist.

3. Verwendung einer Vorrichtung nach Anspruch 1 oder 2,
**dadurch gekennzeichnet, dass**
die Ausgleichsmasse (20) durch einen Koppelmechanismus derart mit dem Produktförderer (12) gekoppelt ist, dass eine Querbewegung des Produktförderers (12) zu einer, insbesondere synchronen, Bewegung der Ausgleichsmasse (20) in die zum Produktförderer (12) entgegengesetzte Richtung führt.

4. Verwendung einer Vorrichtung nach Anspruch 3,
**dadurch gekennzeichnet, dass**
der Koppelmechanismus einen zweiseitigen Hebel (40) umfasst, dessen eines Ende (44) mit der Ausgleichsmasse (20) verbunden ist und dessen anderes Ende (38) mit dem Querantrieb verbunden ist.

5. Verwendung einer Vorrichtung nach Anspruch 4,
**dadurch gekennzeichnet, dass**
der Hebel (40) um eine Achse (42) verschwenkbar ist, die rechtwinklig zu der Querbewegungsrichtung des Produktförderers (12) und/oder zu der Bewegungsrichtung der Ausgleichsmasse (20) orientiert ist.

6. Verwendung einer Vorrichtung nach Anspruch 4 oder 5,
**dadurch gekennzeichnet, dass**
der Hebel (40) im Bereich seines einen Endes (44) mit der Ausgleichsmasse gelenkig verbunden ist.

7. Verwendung einer Vorrichtung nach einem der Ansprüche 4 bis 6,
**dadurch gekennzeichnet, dass**
der Hebel (40) im Bereich seines anderen Endes (38) mit einer Spindelmutteraufnahme (28) oder Gewindemutter gelenkig verbunden ist, welche mit einer Gewindespindel (26) des Querantriebs in Eingriff steht.

8. Verwendung einer Vorrichtung nach Anspruch 7,
**dadurch gekennzeichnet, dass**
die Gewindemutter mit einem Teil einer Trägerstruktur für den Produktförderer (12) fest verbunden ist, welcher in Richtung der Querbewegung relativ zu einem feststehenden Teil der Trägerstruktur verschiebbar ist.

9. Verwendung einer Vorrichtung nach einem der vorstehenden Ansprüche,
**dadurch gekennzeichnet, dass**
die Ausgleichsmasse (20) so ausgebildet ist, dass der Schwerpunkt der Ausgleichsmasse (20) und der Schwerpunkt eines verschiebbaren Teils einer Trägerstruktur für den Produktförderer (12) auf einer Achse liegen, die sich im Wesentlichen in Richtung der Querbewegung erstreckt.

10. Verwendung einer Vorrichtung nach einem der vorstehenden Ansprüche,
**dadurch gekennzeichnet, dass**
die Ausgleichsmasse (20) einen feststehenden Teil einer Trägerstruktur für den Produktförderer (12) in Umfangsrichtung gesehen zumindest abschnittsweise umgibt.

## Claims

1. Use of an apparatus
which comprises a product conveyor (12) drivable in a conveying direction; and a transverse drive by which the product conveyor (12) as a whole is movable in a direction transverse to the conveying direction,
for a transversely overlapping arrangement of product slices cut off from a food product by a cutting machine in addition to an arrangement of the product slices overlapping in the conveying direction,
wherein the product conveyor (12) is coupled to a compensation mass (20) by means of which forces can be compensated which occur by a transverse movement of the product conveyor (12).

2. Use of an apparatus in accordance with claim 1,
**characterized in that**
the compensation mass (20) is movably, in particular displaceably, supported.

3. Use of an apparatus in accordance with claim 1 or claim 2,
**characterized in that**
the compensation mass (20) is coupled to the product conveyor (12) by a coupling mechanism such that a transverse movement of the product conveyor (12) results in a movement, in particular a synchronous movement, of the compensation mass (20) in the direction opposite to the product conveyor (12).

4. Use of an apparatus in accordance with claim 3,
**characterized in that**
the coupling mechanism comprises a two-armed lever (40) whose one end (44) is connected to the compensation mass (20) and whose other end (38) is connected to the transverse drive.

5. Use of an apparatus in accordance with claim 4,
**characterized in that**
the lever (40) is pivotable about an axis (42) which is orientated at right angles to the transverse movement direction of the product conveyor (12) and/or to the direction of movement of the compensation mass (20).

6. Use of an apparatus in accordance with claim 4 or claim 5,
**characterized in that**
the lever (40) is pivotally connected to the compensation mass in the region of its one end (44).

7. Use of an apparatus in accordance with any one of the claims 4 to 6,
**characterized in that**
the lever (40) is pivotally connected in the region of its other end (38) to a spindle nut receiver (28) or threaded nut which is in engagement with a threaded spindle (26) of the transverse drive.

8. Use of an apparatus in accordance with claim 7,
**characterized in that**
the threaded nut is fixedly connected to a part of a carrier structure for the product conveyor (12) which is displaceable in the direction of the transverse movement relative to a fixed part of the carrier structure.

9. Use of an apparatus in accordance with any one of the preceding claims,
**characterized in that**
the compensation mass (20) is configured such that the center of gravity of the compensation mass (20) and the center of gravity of a displaceable part of a carrier structure for the product conveyor (12) lie on an axis which extends substantially in the direction of the transverse movement.

10. Use of an apparatus in accordance with any one of the preceding claims,
**characterized in that**
the compensation mass (20) surrounds a fixed part of a carrier structure for the product conveyor (12) at least section-wise viewed in the peripheral direction.

## Revendications

1. Utilisation d'un appareil qui comprend un convoyeur de produit (12) susceptible d'être entraîné en direction de convoyage, et un entraînement transversal au moyen duquel le convoyeur de produit (12) est déplaçable dans une direction perpendiculaire à la direction de convoyage, pour l'agencement en écailles transversales de tranches de produit séparées d'un produit alimentaire par une machine de coupe, en supplément à un agencement en écailles en direction de convoyage des tranches de produit,
dans laquelle le convoyeur de produit (12) est couplé à une masse de compensation (20) au moyen de laquelle les forces apparaissant du fait d'un mouvement transversal du convoyeur de produit (12) peuvent être compensées.

2. Utilisation d'un appareil selon la revendication 1,
**caractérisée en ce que** la masse de compensation (20) est montée mobile, en particulier capable de translation.

3. Utilisation d'un appareil selon la revendication 1 ou 2,
**caractérisée en ce que** la masse de compensation (20) est couplée via un mécanisme de couplage avec le convoyeur de produit (12) de telle manière qu'un mouvement transversal du convoyeur de produit (12) mène à un mouvement, en particulier synchrone, de la masse de compensation (20) dans la direction opposée au convoyeur de produit (12).

4. Utilisation d'un appareil selon la revendication 3,
**caractérisée en ce que** le mécanisme de couplage comprend un levier à deux branches (40), dont une extrémité (44) est reliée à la masse de compensation (20) et dont l'autre extrémité (38) est reliée à l'entraînement transversal.

5. Utilisation d'un appareil selon la revendication 4,
**caractérisée en ce que** le levier (40) est capable de pivoter autour d'un axe (42) qui est orienté à angle droit par rapport à la direction de déplacement transversal du convoyeur de produit (12) et/ou par rapport à la direction de déplacement de la masse de compensation (20).

6. Utilisation d'un appareil selon la revendication 4 5 ou 5,
**caractérisée en ce que** le levier (40) est relié de façon articulée à la masse de compensation dans la région de sa première extrémité (44).

7. Utilisation d'un appareil selon l'une des revendications 4 à 6,
**caractérisée en ce que** le levier (40) est relié de façon articulée, dans la région de son autre extrémité (38), à un logement d'écrou à broche ou à un écrou taraudé, qui est en engagement avec une broche filetée (26) de l'entraînement transversal.

8. Utilisation d'un appareil selon la revendication 7,
**caractérisée en ce que** l'écrou taraudé est fermement relié à une partie d'une structure porteuse pour le convoyeur de produit (12), laquelle est déplaçable dans la direction du mouvement transversal par rapport à une partie stationnaire de la structure porteuse.

9. Utilisation d'un appareil selon l'une des revendications précédentes,
**caractérisée en ce que** la masse de compensation (20) est ainsi réalisée que le centre de gravité de la masse de compensation (20) et le centre de gravité d'une partie déplaçable d'une structure porteuse pour le convoyeur de produit (12) sont situés sur un axe qui s'étend sensiblement en direction du mouvement transversal.

10. Utilisation d'un appareil selon l'une des revendications précédentes,
**caractérisée en ce que** la masse de compensation (20) entoure, au moins par secteur, une partie stationnaire d'une structure porteuse pour le convoyeur de produit (12) en direction périphérique.
